# EUROPÄISCHE PATENTSCHRIFT

(11) **EP 1 242 917 B1**
(45) Veröffentlichungstag und Bekanntmachung des Hinweises auf die Patenterteilung: **27.04.2005**
(21) Anmeldenummer: 00983022.5
(22) Anmeldetag: 17.10.2000
(51) Int. Cl.: G06F 17/30

(54) **VERFAHREN ZUR ERWEITERUNG EINER DATENBANK BESTEHEND AUS DATENPAAREN AUS EINANDER ZUGEORDNETER ERKENNUNG UND ANTWORT**
METHOD FOR EXPANDING A DATABASE THAT CONSISTS OF DATA PAIRS OF RECOGNITION AND RELATED RESPONSE
PROCEDE D'EXTENSION D'UNE BANQUE DE DONNEES COMPRENANT DES PAIRES DE DONNEES DE RECONNAISSANCE ET DE REPONSE ASSOCIEE

(30) Priorität: 28.10.1999 DE 19952070
(43) Veröffentlichungstag der Anmeldung: 25.09.2002
(73) Patentinhaber: Kiwilogic.Com AG, 20457 Hamburg (DE)
(72) Erfinder: VOSS, Olaf, 20457 Hamburg (DE)
(74) Vertreter: Rohnke, Christian, Dr.
(86) Internationale Anmeldenummer: PCT/DE2000/003640
(87) Internationale Veröffentlichungsnummer: WO 2001/040989

(56) Entgegenhaltungen:
- EP-A- 0 522 591
- EP-A- 0 814 418
- US-A- 4 920 499
- US-A- 5 454 106

## Beschreibung

Die Erfindung betrifft ein Verfahren zur Erweiterung einer Datenbank bestehend aus Datenpaaren aus einander zugeordneter Erkennung und Antwort, wobei die Erkennung aus einem Element oder einer booleschen Verknüpfung von Elementen besteht, und jedes Element eine Funktion ist, die eine Kette von Symbolen als Argument verwendet und einen booleschen Wert zurückgibt, oder eine boolesche Verknüpfung weiterer Elemente ist, und wobei eine Teilmenge der Elemente in einer Erweiterungs-Regeldatenbank abgelegt ist, und wobei die Antwort aus einer beliebigen Kette von Symbolen besteht.

In einer Datenbank können Datenpaare abgelegt werden, die einander eindeutig zugeordnet sind. Diese Datenpaare können als Erkennung und Antwort angesehen werden. Zur Abfrage der Datenbank kann ein Begriff, der einer Erkennung entspricht, eingegeben werden. Die der Erkennung zugeordnete Antwort wird dann von der Datenbank ausgegeben.

Ein Beispiel einer solchen Datenbank ist ein Telefonverzeichnis. Der Datenbanknutzer stellt eine Frage in Form eines Namens, zu dem er die zugeordnete Telefonnummer erfahren möchte. Der Name entspricht der Erkennung innerhalb des Datenpaares. Der Erkennung ist die passende Telefonnummer als Antwort zugeordnet und wird auf die Frage des Nutzers ausgegeben.

Solche Datenbankabfrageverfahren haben den Nachteil, daß immer präzise formulierte Fragen gestellt werden müssen. Da bei der heutigen Verbreitung von EDV jedoch immer mehr Nutzer, die keine spezifischen Kenntnisse haben, Datenbanken nutzen wollen, sind in den letzten Jahren verschiedene Verfahren entwickelt worden, mit denen auf natürlichsprachliche Fragen Antworten aus einer Datenbank ausgegeben werden können. Ein solches Verfahren ist beispielsweise aus der US 5,895,466 bekannt. Es wird ein Verfahren zur Beantwortung einer in natürlicher Sprache gestellten Frage vorgestellt, bei der aus der Frage mindestens ein Schlüssel generiert wird. Weiterhin werden aus der Frage bestimmte Parameter extrahiert und sowohl der Schlüssel als auch die extrahierten Parameter zur Datenbankabfrage benutzt.

Datenbanken, die mit solchen bekannten Verfahren abgefragt werden, haben jedoch den Nachteil, daß sie nur schwer und aufwendig erweiterbar sind. Insbesondere für die Anwendung im Internet besteht ein erheblicher Bedarf, solche Datenbanken ständig zu aktualisieren und neue Frage-Antwort-Paare anzulegen.

Üblicherweise ist der Abfrage ein Abfragealgorithmus mit verschiedenen Regeln unterlegt. Darunter befinden sich auch Verallgemeinerungsregeln, die zum Beispiel Synonyme enthalten. Da eine Frage in unterschiedlichen Formulierungen gestellt werden kann, ist es wichtig, bestimmte Verallgemeinerungsregeln im Algorithmus vorzusehen, um alternative Fragen, die zur gleichen Antwort führen, beantworten zu können. Bei der Erweiterung solcher Datenbanken ist es für den Datenbankinhaber, also beispielsweise ein Unternehmen, das seine Kunden im Internet über seine Produkte informieren möchte, sehr aufwendig, weitere Frage-Antwort-Paare zu ergänzen, zumal mehrere, alternative Frageformulierungen zur gleichen Antwort führen können.

Das Dokument US 5 454 106 benutzt zur Erweiterung der Regeldatenbank eine Methode, bei der der Benutzer aufgefordert wird, in jedem Fall zweifelhafte oder unverständliche Teile einer Anfrage manuell einem bestehenden Datenbankschema zuzuordnen.

Es ist Aufgabe der vorliegenden Erfindung, ein Verfahren zur Erweiterung einer Datenbank vorzustellen, das es auch nicht EDV-kundigen Anwendern erlaubt, mit wenig Aufwand Ergänzungen vorzunehmen.

Erfindungsgemäß wird diese Aufgabe gelöst durch ein Verfahren zur Erweiterung einer Datenbank mit den Merkmalen des Patentanspruchs 1.

Die mit dem erfindungsgemäßen Verfahren zu erweiternde Datenbank besteht aus Datenpaaren aus einander zugeordneter Erkennung und Antwort. Die Erkennung besteht aus Elementen oder einer booleschen Verknüpfung von Elementen. Jedes dieser Elemente ist eine Funktion, die eine Kette von Symbolen, insbesondere einen Text, als Argument verwendet und einen booleschen Wert zurückgibt. Die Elemente können auch boolesche Verknüpfungen weiterer Elemente sein.

Das hat zur Folge, daß eine Erkennung, angewendet auf eine Kette von Symbolen, also insbesondere auf einen Fragentext, einen booleschen Wert, also "wahr" oder "falsch", zurückgibt. Mit der Erkennung kann also insbesondere eine natürlichsprachliche Frage auf das Vorhandensein bestimmter Worte oder eine bestimmte boolesche Verknüpfung bestimmter Worte untersucht werden. Als Antwort wird zurückgegeben, ob die in der Funktion formulierte Bedingung erfüllt wird oder nicht.

Auf diese Art und Weise können Synonyme oder das Zusammentreffen bestimmter Wortkombinationen innerhalb einer Frage erkannt werden.

Wird eine Erkennung auf eine natürlichsprachliche Frage angewendet und ergibt den Wert "wahr", so kann die der Erkennung zugeordnete Antwort ausgegeben werden.

Eine Teilmenge der Elemente ist in einer Erweiterungs-Regeldatenbank abgelegt.

Der Nutzer formuliert erfindungsgemäß eine Frage als Beispiel auf eine vom System zu gebende Antwort.

Gemäß dem Verfahren der Erfindung wird eine zu erkennende kette von Symbolen, d.h. der Fragentext, als Erkennungsvorlage und eine weitere Kette von Symbolen als Antwort definiert.

Es wird dann eine neue, zunächst leere Erkennung erzeugt.

Anschließend werden die Elemente der Erweiterungs-Regeldatenbank auf die Erkennungsvorlage angewendet. Dabei wird festgestellt, ob die Anwendung des Elements "wahr" oder "falsch" ergibt. Wenn die Anwendung eines Elementes auf die Erkennungsvorlage den Wert "wahr" ergibt, werden diejenigen Teile der Erkennungsvorlage, deren Vorhandensein für die logische Wahrheit des Funktionsergebnisses notwendig und hinreichend sind, aus der Erkennungsvorlage entfernt. In der neuen, noch leeren Erkennung wird das angewendete Element oder ein Verweis darauf ergänzt.

Ein Element aus der Erweiterungs-Regeldatenbank kann zum Beispiel eine Oder-Verknüpfung verschiedener Synonyme darstellen. Angewendet auf die Erkennungsvorlage ergibt das Element dann den Wert "wahr", wenn einer der synonymen Ausdrücke in der Erkennungsvorlage enthalten ist. Dieser Ausdruck wird dann aus der Erkennungsvorlage entfernt.

Die neu erzeugte Erkennung wird dann zusammen mit der Antwort als neues Datenpaar in der Datenbank gespeichert.

Mit dem erfindungsgemäßen Verfahren wird erreicht, daß die lediglich als Beispiel angegebene Frage durch die bei den übrigen Abfragen der Datenbank auch verwendeten Regeln, die in der Erweiterungs-Regeldatenbank abgelegt sind, verallgemeinert wird.

Für den Anwender hat das erfindungsgemäße Verfahren den entscheidenden Vorteil, daß er selbst keine Verallgemeinerungen vornehmen oder bei der Erweiterung der Datenbank berücksichtigen muß. Formulierungen, die in bezug auf eine Antwort als alternative Fragen behandelt werden, werden sinngemäß auf die neue Erkennung übertragen.

Vorzugsweise werden vor der Anwendung der Elemente der Erweiterungs-Regeldatenbank auf die Erkennungsvorlage irrelevante Teile aus der Erkennungsvorlage entfernt. Dies kann entweder durch Vergleich mit einer Datenbank erfolgen, die als irrelevant bestimmte Symbolketten enthält. Die als gleich erkannten Symbolketten werden dann aus der Erkennungsvorlage entfernt. Alternativ kann auch der Nutzer befragt werden, welche Teile der Frage aus seiner Sicht nicht relevant sind. Die neue Erkennung wird dann lediglich auf Basis der relevanten Teile der Erkennungsvorlage aufgebaut.

In einer bevorzugten Ausführungsform des erfindungsgemäßen Verfahrens wird nach dem Entfernen von Teilen der Erkennungsvorlage bei einem den booleschen Wert "wahr" liefernden Element aus der Erweiterungs-Regeldatenbank die Anwendung der weiteren Elemente der Erweiterungs-Regeldatenbank auf die Rest-Erkennungsvorlage fortgeführt. Das führt dazu, daß das Verfahren nicht bereits nach dem ersten Element, das den Wert "wahr" ergibt, abgebrochen wird. Es wird weiter überprüft, ob die übrigen, in der Rest-Erkennungsvorlage vorhandenen Symbole abstrahiert werden können.

Die neue Erkennung wird dann um jedes den Wert "wahr" lieferndes Element ergänzt, wobei eine boolesche Verknüpfung mit den schon in der Erkennung vorhandenen Elementen herbeigeführt wird. Ist die Erkennungsvorlage leer, kann das Verfahren abgebrochen werden. Verbleiben nach Anwendung aller in der Erweiterungs-Regeldatenbank enthaltenen Elemente noch Symbolketten in der Erkennungsvorlage zurück, so können neue Elemente zur Ergänzung in der neuen Erkennung definiert werden, die den Wert "wahr" bei Vorliegen der verbliebenen Symbolketten ergeben.

In einer Weiterentwicklung des erfindungsgemäßen Verfahrens ist die Reihenfolge, in der die Entfernung der erkannten Teile durchgeführt wird, durch eine Regel vorgegeben. Dadurch ist es möglich, eine Hierarchie innerhalb der Entfernungen aus der Erkennungsvorlage und der Ergänzungen in der neuen Erkennung zu erreichen. Beispielsweise können zunächst alle Elemente angewendet und damit ermittelt werden, welches Element den größten Teil der Erkennung benötigt, um den Wert "wahr" zu ergeben. Dieses Element erlaubt dann die größte Abstraktion und ist vorrangig in die neue Erkennung aufzunehmen.

Das Verfahren kann zusätzlich dadurch verbessert werden, daß vor dem Entfernen der für die logische Wahrheit des Funktionsergebnisses notwendigen und hinreichenden Teile aus der Erkennungsvorlage eine Abfrage erfolgt, ob diese Teile entfernt und das entsprechende Element in der Erkennung ergänzt werden soll. Diese Abfrage kann derart aussehen, daß der Nutzer, der das neue Frage-Antwort-Paar eingibt, abgefragt wird, ob die den Wert "wahr" liefernden Elemente innerhalb der Frage durch die Verallgemeinerung durch das Element ersetzt werden soll. Dadurch ist es möglich, Fehler bei der Verallgemeinerung zu vermeiden.

Das Verfahren kann mit unveränderter Erkennungsvorlage fortgesetzt werden, falls keine Entfernung und Ergänzung durchgeführt werden soll. Es werden dann die weiteren Elemente der Erweiterungs-Regeldatenbank auf die Erkennungsvorlage angewendet.

Das erfindungsgemäße Verfahren wird im Folgenden anhand eines Beispiels näher erläutert:

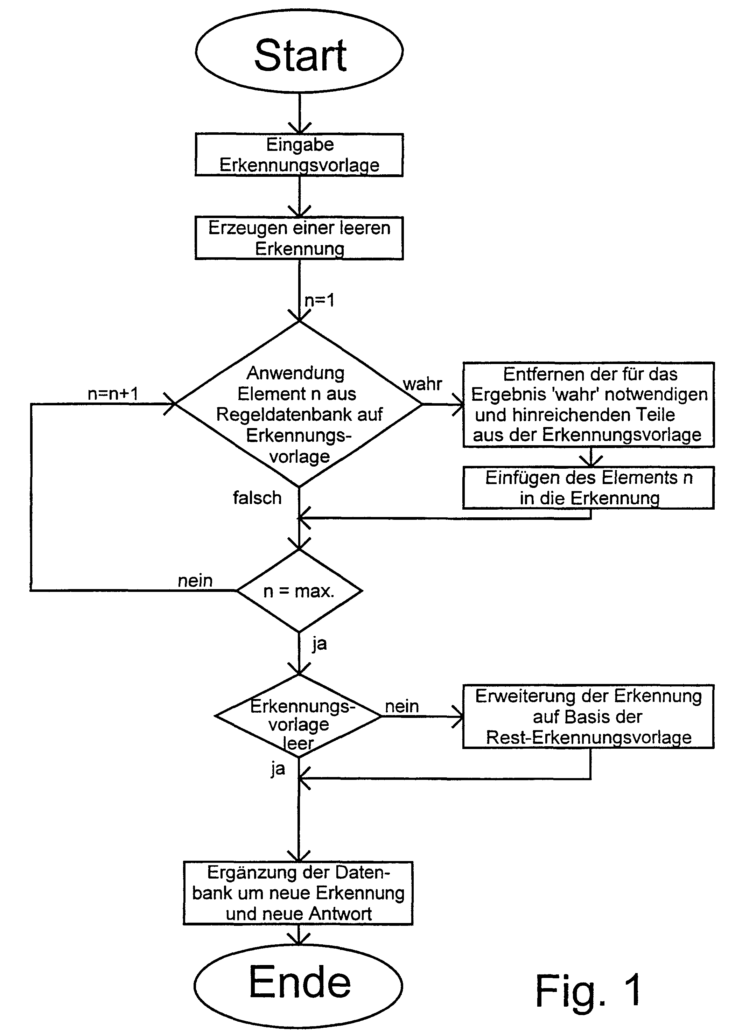

**Fig. 1** zeigt ein Flußdiagramm einer Variante des erfindungsgemäßen Verfahrens.

Der Datenbankinhaber gibt ein Fragebeispiel vor, das erkannt werden soll. Dieses Fragebeispiel dient als Erkennungsvorlage. Es wird anschließend eine zunächst leere, neue Erkennung erzeugt. Dann wird das erste Element der Erweiterungs-Regeldatenbank auf die Erkennungsvorlage angewendet. Ergibt diese Anwendung den Wert "falsch", wird das nächste Element aus der Erweiterungs-Regeldatenbank angewendet. Ergibt die Anwendung den Wert "wahr", werden die Worte der Frage, die für die logische Wahrheit des Funktionsergebnisses notwendig und hinreichend sind, aus der Erkennungsvorlage entfernt. Das Element wird in die neue Erkennung eingefügt. Das Verfahren wird dann mit dem nächsten Element fortgesetzt, bis alle Elemente aus der Erweiterungs-Regeldatenbank angewendet worden sind. Elemente, die den Wert "wahr" ergeben, werden jeweils in die neue Erkennung eingefügt. Dabei wird eine boolesche Verknüpfung mit den aus vorangegangenen Durchläufen bereits in der Erkennung vorhandenen Elementen erstellt.

Ist die Erkennungsvorlage nach Anwendung aller Elemente der Erweiterungs-Regeldatenbank leer, wird die neue Erkennung ergänzt um die zugehörige Antwort in die Datenbank eingefügt.

Ist die Erkennungsvorlage nach Anwendung aller Elemente der Erweiterungs-Regeldatenbank nicht leer, wird die Erkennung auf Basis der Rest-Erkennungsvorlage ergänzt. Dafür werden neue Elemente zur Ergänzung in der neuen Erkennung definiert, die den Wert "wahr" bei Vorliegen der verbliebenen Worte ergeben.

Nachfolgend wird beispielhaft an einem Frage-Antwort-Paar erläutert, wie das erfindungsgemäße Verfahren funktioniert:

Der Datenbankinhaber möchte seinen Kunden Informationen über den Preis eines Produktes zukommen lassen. Produkt X kostet DM 10. Diese Information könnte beispielsweise mit der Frage "Was kostet Produkt X?" abgefragt werden.

In der Erweiterungs-Regeldatenbank ist eine Funktion enthalten, die das Vorhandensein einer der Formulierungen "Was kostet ...?", "Welchen Preis ...?", "Wieviel Geld ...?" usw. überprüft. Wird diese Funktion auf die Frage angewendet, so ergibt sie den Wert "wahr". Innerhalb der Frage sind die Worte "Was kostet" für die logische Wahrheit des Funktionsergebnisses notwendig und hinreichend.

Die Worte "Was kostet" werden dann aus der Erkennungsvorlage entfernt. Es wird eine neue Erkennung erzeugt, in die die angewendete Funktion aus der Regeldatenbank eingefügt wird.

Das Verfahren wird dann auf das verbliebene Wort "Produkt X" mit allen weiteren Elementen aus der Regel-Datenbank angewendet. Alle anschließend angewendeten Funktionen aus der Erweiterungs-Regeldatenbank liefern jedoch den booleschen Wert "falsch", da sich die Produktangabe nicht weiter abstrahieren läßt.

Da die verbleibende Erkennungsvorlage nicht leer ist, werden nun weitere Elemente aus der Rest-Erkennungsvorlage nach einem Verfahren abgeleitet, das nicht Gegenstand dieser Anmeldung ist. Dies kann z. B. dadurch geschehen, daß aus dem verbliebenen Wort "Produkt X" ein Element erzeugt wird, das dann wahr ist, wenn dieses Wort in der zu erkennenden Eingabe enthalten ist.

Das weitere Element wird in der neuen Erkennung hinzugefügt, wobei eine boolesche Und-Verknüpfung mit dem schon in der Erkennung befindlichen Element erzeugt wird.

Die neue Erkennung wird dann zusammen mit einer vom Datenbankinhaber vorzugebenden Antwort als neues Datenpaar abgespeichert.

Die neue Erkennung ist in der Lage, die vorgegebene Antwort auf alternative Frageformulierungen, wie zum Beispiel "Was kostet Produkt X?", "Wieviel muß ich für Produkt X bezahlen?" oder "Wie teuer ist Produkt X?" zu antworten.

## Patentansprüche

1. Verfahren zur Erweiterung einer Datenbank bestehend aus Datenpaaren aus einander zugeordneter Erkennung und Antwort,
wobei die Erkennung aus einem Element oder einer booleschen Verknüpfung von Elementen besteht,
und jedes Element eine Funktion ist, die eine Kette von Symbolen, insbesondere einen Text, als Argument verwendet und einen booleschen Wert zurückgibt, oder eine boolesche Verknüpfung weiterer Elemente ist,
und wobei eine Teilmenge der Elemente in einer Erweiterungs-Regeldatenbank abgelegt ist,
und wobei die Antwort aus einer beliebigen Kette von Symbolen besteht
**dadurch gekennzeichnet, daß**
die Datenbank um ein neues Datenpaar ergänzt wird,
indem eine zu erkennende Kette von Symbolen als Erkennungsvorlage und eine weitere Kette von Symbolen als Antwort definiert werden,
eine neue, leere Erkennung erzeugt wird,
und die Elemente der Erweiterungs-Regeldatenbank auf die Erkennungsvorlage angewendet werden,
und, wenn die Anwendung eines Elementes auf die Erkennungsvorlage den Wert 'wahr' ergibt, diejenigen Teile der Erkennungsvorlage, deren Vorhandensein für die logische Wahrheit des Funktionsergebnisses notwendig und hinreichend sind, aus der Erkennungsvorlage entfernt werden,
und die neue Erkennung durch das den Wert 'wahr' liefernde Element oder eine boolesche Verknüpfung des den Wert 'wahr' liefernden Elements mit weiteren, aus der verbleibenden Erkennungsvorlage abgeleiteten Elementen ergänzt wird,
und die derart erzeugte Erkennung zusammen mit der Antwort als neues Datenpaar in der Datenbank gespeichert wird.

2. Verfahren nach Anspruch 1, **dadurch gekennzeichnet, daß** vor der Anwendung der Elemente der Erweiterungs-Regeldatenbank auf die Erkennungsvorlage irrelevante Teile aus der Erkennungsvorlage entfernt werden.

3. Verfahren nach Anspruch 1 oder 2, **dadurch gekennzeichnet, daß** nach dem Entfernen von Teilen der Erkennungsvorlage bei einem den Wert 'wahr' liefernden Element aus der Erweiterungs-Regeldatenbank die Anwendung der Elemente der Erweiterungs-Regeldatenbank auf die Rest-Erkennungsvorlage fortgeführt wird.

4. Verfahren nach einem der Ansprüche 1 bis 3, **dadurch gekennzeichnet, daß** die Reihenfolge, in der die Entfernung der erkannten Teile aus der Erweiterungs-Regeldatenbank durchgeführt wird, durch eine Regel festgelegt ist.

5. Verfahren nach einem der Ansprüche 1 bis 4, **dadurch gekennzeichnet, daß** vor dem Entfernen der für die logische Wahrheit des Funktionsergebnisses notwendigen und hinreichenden Teile aus der Erkennungsvorlage eine Abfrage erfolgt, ob diese Teile entfernt und das entsprechende Element in der Erkennung ergänzt werden soll.

6. Verfahren nach Anspruch 5, **dadurch gekennzeichnet, daß** die Anwendung der Elemente der Erweiterungs-Regeldatenbank auf die Erkennungsvorlage fortgesetzt wird, falls keine Entfernung und Ergänzung durchgeführt werden soll.

## Claims

1. Method for extending a database comprising data pairs made up of an identifier and a response which are associated with one another,
where the identifier comprises an element or a Boolean combination of elements,
and each element is a function which uses a chain of symbols, particularly a text, as an argument and returns a Boolean value, or is a Boolean combination of further elements,
and where a subset of the elements is stored in an extension rule database,
and where the response comprises an arbitrary chain of symbols,
**characterized in that**
the database is supplemented by a new data pair by virtue of a chain of symbols which is to be identified being defined as an identification mask and a further chain of symbols being defined as a response, a new, empty identifier is generated,
and the elements of the extension rule database are applied to the identification mask,
and, if the application of an element to the identification mask gives the value 'true', those parts of the identification mask whose presence is necessary and sufficient for the function result to be logically true are removed from the identification mask,
and the new identifier is supplemented by the element which delivers the value 'true' or by a Boolean combination of the element which delivers the value 'true' with further elements, derived from the remaining identification mask,
and the identifier generated in this manner is stored in the database together with the response as a new data pair.

2. Method according to Claim 1, **characterized in that** the application of the elements of the extension rule database to the identification mask is preceded by removal of irrelevant parts from the identification mask.

3. Method according to Claim 1 or 2, **characterized in that** the removal of parts of the identification mask when an element delivers the value 'true' from the extension rule database is followed by continuation of the application of the elements of the extension rule database to the remaining identification mask.

4. Method according to one of Claims 1 to 3, **characterized in that** the order in which the identified parts are removed from the extension rule database is stipulated by a rule.

5. Method according to one of Claims 1 to 4, **characterized in that** the removal of the parts which are necessary and sufficient for the function result to be logically true from the identification mask is preceded by the performance of a test to determine whether these parts need to be removed and whether the corresponding element in the identifier needs to be supplemented.

6. Method according to Claim 5, **characterized in that** the application of the elements of the extension rule database to the identification mask is continued if no removal and supplementing need to be performed.

## Revendications

1. Procédé pour l'extension d'une banque de données comprenant des paires de données constituées d'une identification et d'une réponse respectivement attribuées, l'identification comprenant un élément ou un enchaînement booléen d'éléments, et chaque élément étant une fonction qui utilise une chaîne de symboles, en particulier un texte, comme argument et restitue une valeur booléenne, ou est un enchaînement booléen d'autres éléments, et une quantité partielle des éléments étant déposée dans une banque de données standard d'extension, et la réponse étant constituée d'une chaîne quelconque de symboles, **caractérisé en ce que** la banque de données est complétée par une nouvelle paire de données du fait qu'une chaîne à identifier de symboles et une autre chaîne de symboles sont définies respectivement comme modèle de reconnaissance et comme réponse, une reconnaissance nouvelle et vide étant générée, et les éléments de la banque de données standard d'extension étant appliqués au modèle de reconnaissance, et, lorsque l'application d'un élément au modèle de reconnaissance donne la valeur "vraie", les parties du modèle de reconnaissance, dont la présence est nécessaire et suffisante pour la vérité logique du résultat du fonctionnement, sont éliminées du modèle de reconnaissance, et la nouvelle reconnaissance par l'élément fournissant la valeur "vraie" ou un enchaînement booléen de l'élément fournissant la valeur "vraie" est complété(e) avec d'autres éléments déduits du modèle de reconnaissance restant, et la reconnaissance générée de cette façon étant mémorisée en même temps que la réponse comme nouvelle paire de données dans la banque de données.

2. Procédé selon la revendication 1, **caractérisé en ce que**, avant l'application des éléments de la banque de données standard d'extension au modèle de reconnaissance, des parties sans importance sont enlevées du modèle de reconnaissance.

3. Procédé selon la revendication 1 ou 2, **caractérisé en ce que**, après l'enlèvement de parties du modèle de reconnaissance pour un élément fournissant la valeur "vraie" de la banque de données standard d'extension, l'application des éléments de la banque de données standard d'extension au modèle de reconnaissance du reste est poursuivie.

4. Procédé selon l'une quelconque des revendications 1 à 3, **caractérisé en ce que** l'ordre de succession, dans lequel l'enlèvement des parties reconnues de la banque de données standard d'extension est effectué, est défini par une règle.

5. Procédé selon l'une quelconque des revendications 1 à 4, **caractérisé en ce que**, avant l'enlèvement des parties, nécessaires et suffisantes pour la vérité logique du résultat de fonctionnement, du modèle de reconnaissance, on procède à une interrogation pour savoir si ces parties sont enlevées et si l'élément correspondant dans la reconnaissance doit être complété.

6. Procédé selon la revendication 5, **caractérisé en ce que** l'application des éléments de la banque de données standard d'extension au modèle de reconnaissance est poursuivie si aucun enlèvement et aucun complément ne doit être effectué.
